# EUROPEAN PATENT APPLICATION

(11) **EP 2 669 797 A2**
(43) Date of publication of application: **04.12.2013**
(21) Application number: 13169569.4
(22) Date of filing: 28.05.2013
(51) Int. Cl.: G06F 9/45

(54) **Method and system for translating a function into non-native instructions**

(30) Priority: 30.05.2012 EP 12170053
(71) Applicant: Vector Fabrics B.V., 5616 RM Eindhooven (NL)
(72) Inventor: Van Eijndhoven, Jos, 5616 RM Eindhoven (NL); Stravers, Paul, 5616 RM Eindhoven (NL)
(74) Representative: Engelfriet, Arnoud Peter

(57) **Abstract**

Method and system for translating a function in a computer programming language into a non-native instruction set, as part of a program that is otherwise in a native instruction set computer program. The method comprises translating the function into the non-native instruction set, prefixing the translated function with a preamble in the native instruction set format that implements the required conversion and non-native instruction set interpretation when called from native code segments, and incorporating into the translated function and/or the preamble a means of identifying the function as being in the non-native instruction set.

## Description

### FIELD OF THE INVENTION

The invention relates to a method of and system for translating a function in a computer programming language into a non-native instruction set, as part of a program that is otherwise in a native instruction set computer program

The invention further relates to a computer program product.

### BACKGROUND OF THE INVENTION

Computer processing units execute instructions (programs) specified in a particular binary instruction set format. In this context, the term "native code" refers to computer programs that are compiled to run on a particular processor and its set of instructions.

Sometimes it is advantageous to create part of the program in a different (non-native) instruction set. For such mixed instruction set programs, mechanisms must be provided to translate or interpret the non-native code sections at run-time for execution on the processing unit. Well-known technologies to do so are Instruction Set Simulators (ISS) and Just-In-Time (JIT) compilers.

A traditional motivation for having mixed instruction set programs, is the portability of a standard instruction set across different processors, of which the Java byte code is a prevalent example. Another motivation can be a more compact program representation, saving memory space in the target device. In this work a non-native instruction set is used to allow in-depth run-time analysis of the program behavior.

A well-known approach comprises manually wrapping the source code of every non-native function with a function that explicitly takes care of marshaling function arguments and calling the non-native interpreter. The problem with this approach is two-fold. First, it is not an automatic method and therefore very costly to do if the non-native library is large. Typical libraries involve hundreds of thousands of source code lines,which makes it prohibitive to manually wrap for the purpose of library behavior analysis. Second, when a wrapped function is called through a function pointer from another wrapped function, it is not possible to short-cut the marshaling and unmarshaling steps. The reason for this is that it is not possible to derive the non-native function pointer by inspecting the unified function pointer. This makes the manually wrapped implementation very inefficient.

US5481684 discloses a method that allows code from a first instruction set (for example RISC instruction code) to reside within a segment defined by a second instruction set (for example a CISC segment). To this end, the CISC architecture is extended to provide for segments that can hold RISC code or CISC code. A processor state is switched at function call and return boundaries. A disadvantage of this approach is that the caller must be aware of the switch, and therefore the original native program would have to be modified.

The cross-platform and open source Mono platform is designed to allow developers to easily create cross platform applications. Its so-called Ahead of Time compilation feature, documented at <http://www.mono-project.com/Mono:Runtime:Documentation:AOT> allows Mono to precompile assemblies to minimize JIT time, reduce memory usage at runtime and increase the code sharing across multiple running Mono application. The code generated by Ahead-of-Time compiled images is position-independent code. This allows the same precompiled image to be reused across multiple applications without having different copies: this is the same way in which ELF shared libraries work: the code produced can be relocated to any address. However, this method is limited to systems that are all compatible with the ELF format. Another shortcoming is that native to non-native calls must be adjusted to handle the non-native callees.

In his bachelor thesis "Implementing Pinocchio: a VM-less metacircular runtime library for dynamic languages", Software Composition Group, University of Bern, Switzerland, December 2011 < http://scg.unibe.ch/archive/projects/Flue11a.pdf> Olivier Flueckiger discloses a method of invoking non-native code from native code. His method however has the disadvantage that the caller must explicitly provide a selector as an extra call argument. This method is therefore not suitable for drop-in library and program replacement.

UNM CS Tech Report TR-CS-2003-38 by Trek Palmer, December 2003, discloses a platform-independent dynamic binary translation framework. In this framework control is transferred from native code to a JIT-compiler by overwriting the first few words of the program entry with a jump to the JIT compiler entry point. This only works for the program entry (because the _start function has no arguments and no return value) but it does not work for arbitrary calls in a program as the information on the signature of the callee is missing.

### SUMMARY OF THE INVENTION

The purpose of the present invention is to seamlessly integrate non-native functions in existing native programs or libraries, without the requirement to change or recompile the existing native programs or libraries. For example, an existing native program may depend on a native dynamically loaded library (DLL) to perform part of the program's computation.

To this end the invention provides a method as claimed in claim 1 and a corresponding system as claimed in claim 7. The native instruction set is for example comprised in the x86 family of instruction sets, and the non-native instruction set is not comprised in this family, but instead in e.g. a RISC instruction set such as MIPS.

Programming languages like C++ and C enable the programmer to create a function pointer by taking the address of a function and then pass this pointer from one function to another until the point where the function pointer is dereferenced by a call instruction. The problem is that at the time when the address of a non-native function is taken it is generally not known whether the final pointer dereference will be executed by a native call instruction or by a non-native call instruction. It is even possible that the same non-native function pointer is dereferenced at multiple call sites, some of which are native call instructions and others are non-native call instructions.

The invention provides for a unified means for identifying the function as being in the non-native instruction set, so that it can be dereferenced from both a native call site and a non-native call site, thereby solving the problem of function and method calls across different instruction sets. Next to this identification, non-native functions are extended with a preamble in native format that contains information on the function signature to support native calls to this same function.

This new method allows that the program developer can exchange native code for non-native code at function or library granularity. This is beneficial as it allows to balance program analysis features provided by the non-native instruction set with the execution speed of plain native code. Neither the native code sections nor the non-native code sections need to be aware of the boundaries between the native and non-native code, because the instruction set switches are handled seamlessly at run-time.

Preferably the method is applied to plural functions comprised in a single dynamically loadable library. This way, the entire DLL is converted into non-native code and can be used as a drop-in replacement for a native DLL. The remainder of the program then preferably remains unchanged.

In an embodiment the means of identifying the function as being in the non-native instruction set comprises a marker at a known position within the code comprising the function. The advantage of using such a marker is that it is easy to verify if the marker is present. Thus, a most efficient implementation is provided.

In another embodiment the means of identifying the function as being in the non-native instruction set comprises a function signature in the non-native instruction set at a known position within the preamble of the code comprising the function. To marshal the native call frame to a non-native call frame correctly, the type signature of the called function must be known to the interpreter. In this embodiment the type signature of the called function is stored as part of the non-native function, for example as part of its native preamble or as part of the first non-native instruction of the non-native function. In a further refinement of this embodiment, the known position is referenced in an information element at a further known position within the code comprising the function, allowing the signature itself to be present at any location. By searching for a function signature at the known position, again an efficient implementation is provided. In comparison to the previous embodiment, embedding the function signature has the advantage that this information can be used directly in execution of the function.

In yet another embodiment the means of identifying the function as being in the non-native instruction set comprises reading one or more initial words of the function implementation and verifying whether those words represent legal instructions in the native instruction set. Given the differences between native and non-native instruction sets, it is very unlikely that those initial words will be legal instructions in the native set if they are written in the non-native set. This embodiment may be refined by determining more particularly whether the words represent legal instructions at the start of a function. With that extra constraint it is almost impossible to have a false positive

The invention further provides for a computer-readable storage medium comprising executable code for causing a computer to execute the method of the invention.

### BRIEF DESCRIPTION OF THE FIGURES

The invention will now be explained in more detail with reference to the figures, in which:
Fig. 1 schematically illustrates a system for translating a function in a computer programming language into a non-native instruction set, as part of a program that is otherwise in a native instruction set computer program;
Fig. 2 illustrates a corresponding method in which a preamble is inserted in accordance with the invention;
Fig. 3 illustrates a method of executing the program obtained through this method and/or system; and
Fig. 4 schematically illustrates a portion of source code as compiled as part of the program into a non-native instruction set.

In the figures, same reference numbers indicate same or similar features. In cases where plural identical features, objects or items are shown, reference numerals are provided only for a representative sample so as to not affect clarity of the figures.

### DETAILED DESCRIPTION OF CERTAIN EMBODIMENTS

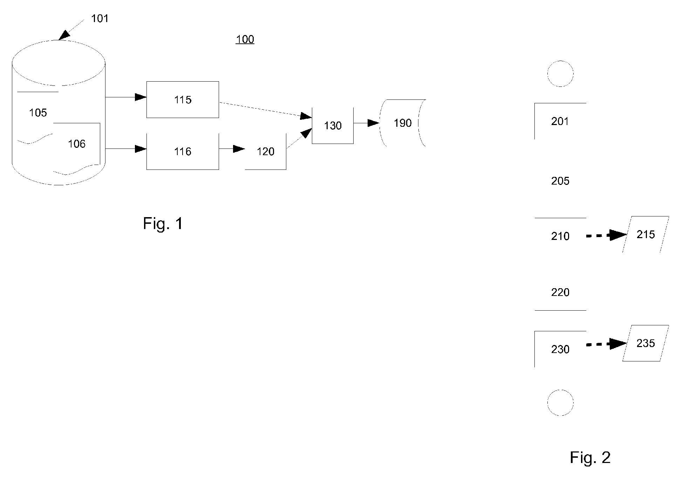

Fig. 1 schematically illustrates a system for translating a function in a computer programming language into a non-native instruction set, as part of a program that is otherwise in a native instruction set computer program. The system is part of a system for compiling and linking computer program source code into binary executable code. Such a system by itself is well known and will not be elaborated upon further.

Relevant for the present invention is that one or more functions in the source code are designed to be compiled into a non-native instruction set, that is an instruction set that is different from the instruction set into which most of the source code is to be compiled. For example, the main program may be compiled for the Intel x86 instruction set, and one module or library of code may be compiled for the MIPS instruction set.

The compiler system 100 of Fig. 1 comprises a storage medium 101 for storing source code, which source code includes at least one portion 105, e.g. one or more related files, that is to be compiled into the native instruction set. Another portion 106 is to be compiled into the non-native instruction set.

The system 100 comprises a first compiler module 115 for compiling source code into the native instruction set, and a second compiler module 116 for compiling the source code 106 into the non-native instruction set. A post-processor 130 may provide for additional processing, such as linking and loading. This process as such is well-known. The end result is a mixed instruction set program 190.

In accordance with the present invention, an intermediary module 120 is provided to prefix the function or functions from the portion 106 with a preamble in the native instruction set format that implements the required conversion and non-native instruction set interpretation when called from native code segments. This module 120 incorporates into the translated function and/or the preamble a means of identifying the function as being in the non-native instruction set.

The format of the preamble is such that it cannot be expressed in a high-level language like C or C++. Consequently, it is not possible for a human programmer to insert a preamble by extending or changing the source code that is to be compiled to non-native code. Only the non-native compiler module 120 can create and insert the preamble as part of its program translation flow.

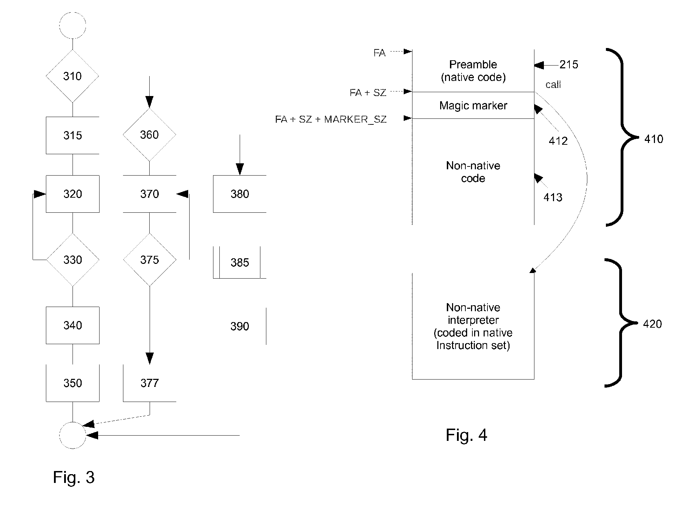

Fig. 2 illustrates a method of compiling a function to non-native code format in which the preamble is created as follows.
1. In step 201 the non-native compiler includes a data value with the generated non-native assembly code that encodes the type signature of said function. Said data value can be stored directly with the non-native function code, or said data value can be stored in a data segment while including a reference to said data value at a known place in the non-native function code.
2. The non-native compiler in step 205 marks the start of every new function in the non-native assembly code. In one embodiment, every non-native function starts with a special non-native instruction that signifies the beginning of a function. This instruction can than also be used to hold a reference to the encoded type signature of the function as explained in the previous paragraph (1). In another embodiment the compiler inserts a pseudo operation right at the start of every new function. This pseudo operation includes a reference to said type signature data value.
3. The non-native assembler in step 210 translates the function start marker to a native preamble 215 of fixed size, which is elaborated upon below with reference to Fig. 4. The native instructions emitted to this preamble code section 215 perform the following tasks:
   (a) Capture the stack address of the call frame created by the native caller;
   (b) Compute the start address of the non-native function. In one embodiment this is done by adding a small offset to the current program counter; In another embodiment this is done by emitting a so-called relocation that the system linker will resolve and fill with the address of the first non-native instruction of the function.
   (c) Retrieve a reference to the encoded function type signature described above in paragraph (1);
   (d) For some purposes (such as program behavior analysis) it is useful to distinguish different native calls sites to the same non-native function. In such cases, the preamble 215 also captures the caller return address because that uniquely identifies the native call site.
   (e) A control transfer instruction (such as a native jump instruction or a native call instruction) to the entry point of the non-native instruction set interpreter (ISS). Said ISS uses the four values computed under item (a), (b), (c) and (d) to marshal and execute the native function, as described below in the detailed description of Fig. 3.
4. Following the assembling of the native preamble 215, the non-native assembler in step 220 continues with assembling the non-native instructions in the assembly text generated by the non-native compiler.Next, in step 230 the non-native assembler creates the binary object code 235 in accordance with the native ABI, such that the native linker can create an executable program or an executable DLL that can operate as a drop-in replacement for the natively compiled program or DLL, which becomes part of the program 190.

Fig. 3 illustrates a method of executing the program 190 obtained through the method and/or system of the invention. The executing environment, e.g. an operating system and/or processor, can be real or virtual, as by itself is again well known. When a function is invoked, the executing environment determines the address of the entry point of this function and begins execution at this address.

In step 310, the method determines if the calling function is native or non-native. If the calling function is native, the method proceeds to step 315 where the native call frame is marshaled to a non-native call frame. To do this correctly the type signature of the called function must be known to the interpreter. Otherwise the method proceeds to step 360 below. It is a key property of the current invention that it allows to proceed from step 310 to step 315 without any involvement of the calling native function. On the other hand, in order to proceed from step 310 to step 360 the involvement of the calling non-native function is required, as explained below.

In step 320 the instructions of said non-native function are interpreted one by one. Next, step 330 causes step 320 to be repeated until no further instructions are present in the non-native function. Note that the non-native function may itself invoke other functions, either native or non-native.

In step 340 the return value of the non-native function is marshaled to the format expected by the native ABI. Often the native ABI specifies that the location of the return value depends on the data type of the return value. For example, a floating point value must be returned in a fixed native floating point register, but an integer value must be returned in a fixed native integer register. The type signature presented above in step 310 includes the return type of the non-native function, and this can be used to select the correct location as prescribed by the native ABI.

Finally, in this flow in step 350 control is returned to the caller in accordance with the native ABI.

If the calling function is non-native, the method instead proceeds to step 360. Here it is determined if the called function is native or not, using the means of identifying the function as being in the non-native instruction set discussed earlier. Using this means is discussed below in more detail with reference to Fig. 4.

If the called function is determined as non-native, there is no need to marshal call frames and return values because there is no instruction set switch. Having used the means of identifying, execution of the non-native code is started in step 370. The address of the first non-native instruction can be found as discussed below with reference to Fig. 4. Non-native instruction execution takes place in step 370 and 375, where step 375 determines if further instructions are present in the non-native functions, and if so, the method repeats step 370 until the function returns. Then control is returned in accordance with the non-native ABI to the caller in step 377.

If the called function is determined as native, the type signature of the called function is obtained. In accordance with the current invention, said type signature is stored with the non-native call instruction, or a reference to said type signature is stored with the non-native call instruction.

Next, in step 380 the non-native call frame is marshaled to the equivalent native call frame. The format of the native call frame typically depends on the type signature of the called function. In step 385 the native function is called in accordance with the native ABI. Finally, when the native function returns, in step 390 the native return value is marshaled to the format prescribed by the non-native ABI. Typically this requires information on the data type of the return value, which is available from said type signature.

The above steps result in a seamless run-time transition from a native instruction set to a non-native instruction set, even if the ABIs of the two instruction sets are incompatible.

Fig. 4 schematically illustrates the portion 106 as compiled as part of the program 190 in one embodiment. This portion 106 is compiled in a manner that enables the marshaling of the native call frame to a non-native call frame as done in step 315. The element 410 shown corresponds to the portion 106, comprising preamble 215 in the native instruction set, magic marker 412 and function body 413 in the non-native instruction set. The non-native function 106 starts with the preamble 215, a native code fragment of fixed size SZ, at the start address FA of the called function from the call instruction. Said preamble 215 invokes the non-native code interpreter with the address of the native call frame and with the address of the first non-native instruction of said non-native function.

At address FA + SZ a particular data word is present. In accordance with an embodiment of the invention, the data word has a fixed size MARKER_SZ and should equal a predetermined constant MAGIC_MARKER. If this is the case, then the interpreter infers that the called function is also coded in the non-native instruction set and it will call the non-native function by transferring control to address FA + SZ + MARKER_SZ.

In another embodiment, no predetermined constant MAGIC_MARKER is used. Instead, a function signature in the non-native instruction set is inserted at the position FA+SZ. The function signature is in a well-known format, allowing the executing environment to recognize whether the signature is present or not, and from that to conclude whether the function 410 comprises the body 413 with non-native instructions.

In yet another embodiment a particular chosen instruction, e.g. a no-operation or NOP, is present at the position FA+SZ if the function comprises the body 413 with non-native instructions.

### CLOSING NOTES

The above provides a description of several useful embodiments that serve to illustrate and describe the invention. The description is not intended to be an exhaustive description of all possible ways in which the invention can be implemented or used. The skilled person will be able to think of many modifications and variations that still rely on the essential features of the invention as presented in the claims. In addition, well-known methods, procedures, components, and circuits have not been described in detail.

Some or all aspects of the invention may be implemented in a computer program product, i.e. a collection of computer program instructions stored on a computer readable storage device for execution by a computer. The instructions of the present invention may be in any interpretable or executable code mechanism, including but not limited to scripts, interpretable programs, dynamic link libraries (DLLs) or Java classes. The instructions can be provided as complete executable programs, as modifications to existing programs or extensions ("plugins") for existing programs. Moreover, parts of the processing of the present invention may be distributed over multiple computers or processors for better performance, reliability, and/or cost.

Storage devices suitable for storing computer program instructions include all forms of non-volatile memory, including by way of example semiconductor memory devices, such as EPROM, EEPROM, and flash memory devices, magnetic disks such as the internal and external hard disk drives and removable disks, magneto-optical disks and CD-ROM disks. The computer program product can be distributed on such a storage device, or may be offered for download through HTTP, FTP or similar mechanism using a server connected to a network such as the Internet. Transmission of the computer program product by e-mail is of course also possible.

When constructing or interpreting the claims, any mention of reference signs shall not be regarded as a limitation of the claimed feature to the referenced feature or embodiment. The use of the word "comprising" in the claims does not exclude the presence of other features than claimed in a system, product or method implementing the invention. Any reference to a claim feature in the singular shall not exclude the presence of a plurality of this feature. The word "means" in a claim can refer to a single means or to plural means for providing the indicated function.

## Claims

1. A method for translating a function in a computer programming language into a non-native instruction set, as part of a program that is otherwise in a native instruction set computer program, the method comprising
• translating the function into the non-native instruction set,
• prefixing the translated function with a preamble in the native instruction set format that implements the required conversion and non-native instruction set interpretation when called from native code segments,
• incorporating into the translated function and/or the preamble a means of identifying the function as being in the non-native instruction set.

2. The method of claim 1, in which the means of identifying the function as being in the non-native instruction set comprises a marker at a known position within the code comprising the function.

3. The method of claim 1, in which the means of identifying the function as being in the non-native instruction set comprises a function signature in the non-native instruction set at a known position within the preamble of the code comprising the function.

4. The method of claim 2, in which the known position is referenced in an information element at a further known position within the code comprising the function.

5. The method of claim 1, in which the means of identifying the function as being in the non-native instruction set comprises reading one or more initial words of the function and determining whether those words represent legal instructions in the native instruction set.

6. The method of claim 1, in which the native instruction set is comprised in the x86 family of instruction sets, and the non-native instruction set is not comprised in this family.

7. The method of claim 1, applied to plural functions comprised in a single dynamically loadable library.

8. A system for translating a function in a computer programming language into a non-native instruction set, as part of a program that is otherwise in a native instruction set computer program, comprising
• means for translating the function into the non-native instruction set,
• means for prefixing the translated function with a preamble in the native instruction set format that implements the required conversion and non-native instruction set interpretation when called from native code segments, and
• means for incorporating into the translated function and/or the preamble a means of identifying the function as being in the non-native instruction set.

9. A computer-readable storage medium comprising executable code for causing a computer to execute the method of claim 1.
